# FASCICULE DE BREVET EUROPEEN

(11) **EP 1 759 143 B1**
(45) Date de publication et mention de la délivrance du brevet: **10.10.2012**
(21) Numéro de dépôt: 05757231.5
(22) Date de dépôt: 12.04.2005
(51) Int. Cl.: F16L 55/175

(54) **METHODE DE REPARATION D'UNE FUITE SUR UNE CANALISATION DE GAZ A L'ENDROIT D'UNE BRIDE**
VERFAHREN ZUR REPARATUR EINES LECKS IM FLANSCH EINER GASLEITUNG
METHOD OF REPAIRING A LEAK IN A FLANGE OF A GAS PIPE

(30) Priorité: 28.04.2004 FR 0404484
(43) Date de publication de la demande: 07.03.2007
(73) Titulaire: Boulet d'Auria, Vincent, 98000 Monaco (MC)
(72) Inventeur: BOULET D'AURIA, Vincent, F-06360 Eze (FR); SLIMANI, Hacen, F-06300 Nice (FR)
(86) Numéro de dépôt international: PCT/FR2005/000876
(87) Numéro de publication internationale: WO 2005/111493

(56) Documents cités:
- GB-A- 2 080 916
- US-A- 3 938 774

## Description

### Domaine technique

La présente invention concerne les réparations des fuites dans les canalisations où circule du fluide sous pression et en particulier une méthode de réparation d'une canalisation de fluide à l'endroit de la fuite.

### Etat de la technique

De part leur conception, les brides utilisent toujours un « joint » en matériau plus ou moins rigide capable d'assurer l'étanchéité localement. Cette pièce constitue le point faible de la bride, et devient principalement la source de fuite. Ce défaut s'accentue lorsque la bride est exploitée sous pression. Pour cette raison, les fuites dans les canalisations ont souvent lieu à l'endroit des brides.

La réparation de brides fuyardes tout en maintenant la canalisation opérationnelle reste une mission très délicate. Dans le cas particulier d'un gaz incolore, la complexité provient de la localisation de la fuite qui peut s'immiscer soit dans la partie supérieure du joint, soit cheminer à travers les boulons de fixation. Pour ainsi dire, dans de telles conditions la fuite reste indétectable.

A ce jour, il existe trois catégories de procédés de réparation mais leur efficacité est liée aux dommages de la bride et surtout aux conditions d'exploitation (température, pression, nature du fluide...). Ainsi, dans le procédé mécanique classique, deux demi-colliers permettent de coiffer la bride. Ces colliers souvent en acier, lourds et encombrants créent des contraintes mécaniques et affaiblissent la bride. Leur technologie utilise soit des joints en élastomère à comprimer lors du serrage autour de la bride, soit un surmoulage en résine injectée dans l'interstice formé entre le collier et la bride. La réparation condamne donc la bride car la résine est souvent un adhésif puissant très difficile à retirer.

Dans la majeure partie des cas, les brides fuyardes sont souvent inaccessibles, encombrées, abîmées et même parfois ovalisées. Par conséquent, l'utilisation d'un collier à joint n'est pas toujours évidente, car celui-ci est encombrant et lourd et il provoque toujours un vieillissement prématuré du tube avoisinant et ainsi entraîne la formation de fissures.

Si un surmoulage en résine est utilisé, le coffrage métallique a les mêmes contraintes que précédemment mais des difficultés d'injection viennent s'ajouter. En effet, il impossible d'injecter une quelconque résine pendant que la bride fuit car de gros problèmes d'adhérence apparaissent. De plus, une injection sous pression n'est pas possible car l'opérateur risque d'envoyer de la résine à l'intérieur de la conduite.

Un deuxième procédé surtout utilisé en Grande Bretagne consiste à injecter de la résine. La bride est perforée et une résine adaptée est injectée au niveau du joint fuyard. La résine est censée faire le tour de la bride, combler les éventuels interstices, polymériser malgré les conditions opératoires et enfin arrêter la fuite. Cette technologie délicate et aléatoire reste peu répandue dans les services de maintenance.

Enfin, le procédé par « bandage » consiste à disposer une bande de tissu de verre pré-imprégné de résine. La pause est difficile voire impossible sous pression. Ce système de « garrot » autour de la bride fuyarde semble plus proche d'un bricolage de fortune que d'une réparation certifiée par des professionnels. Ce procédé présente des inconvénients majeurs, notamment il est utilisable seulement si l'état de surface de la bride est préparé et nettoyé afin de favoriser l'accrochage du composite (or l'intervention sous fuite ne le garantit pas) et si celui-ci est installé convenablement, il condamne la bride de tout accès et empêche son démontage lors d'une campagne de maintenance programmée.

### Exposé de l'invention

C'est pourquoi le but de l'invention est d'améliorer une méthode de réparation d'une canalisation contenant du fluide sous pression qui peut être réalisée facilement et efficacement alors que la canalisation est maintenue opérationnelle, telle que décrite dans GB2080916

Un autre but de l'invention est de réaliser une méthode de réparation d'une canalisation contenant du fluide sous pression, à l'endroit d'une bride, qui laisse la bride intacte et permet d'y accéder facilement en cas d'intervention majeure sur la bride.

L'objet de l'invention est donc une méthode de réparation d'une canalisation renfermant du fluide sous pression selon la revendication 1.

### Description détaillée de l'invention

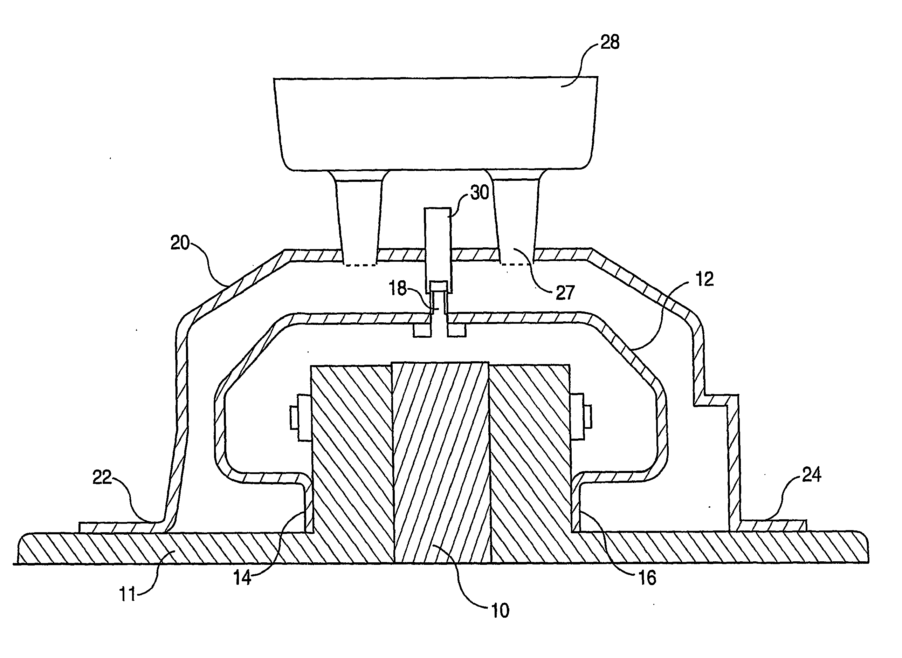

Les buts, objets et caractéristiques de l'invention apparaîtront plus clairement à la lecture de la description qui suit faite en référence à la figure unique représentant une coupe de la bride et des deux coffrages utilisés pour la mise en oeuvre de la méthode selon l'invention.

Dans la description qui suit, on suppose qu'une fuite a été détectée à l'endroit d'une bride 10 d'une canalisation cylindrique 11 où se trouve du fluide sous pression. Toutefois, cette fuite pourrait se situer à n'importe quel endroit de la canalisation en dehors d'une bride.

Dans cet exemple, la canalisation 11 est une canalisation de transport de gaz telle qu'une canalisation où passent un ou plusieurs câbles électriques dans une atmosphère de gaz hexafluorure de soufre destiné à isoler la canalisation électriquement et thermiquement. Mais ce pourrait être une canalisation de transport de liquide. A noter qu'il importe peu de savoir à quel endroit précis se situe la fuite comme on le verra par la suite.

La première étape de la méthode selon l'invention consiste à entourer la bride par un premier coffrage 12 souple et étanche ayant la forme d'un anneau ouvert à sa base pour y emprisonner la bride 10. Pour ce faire, les bords 14 et 16 du coffrage perpendiculaires à l'axe de la canalisation 11 sont fixés aux flancs latéraux de la bride, par exemple à l'aide d'un adhésif double face.

Le coffrage souple et étanche 12 dispose d'une communication avec l'extérieur, une valve 18, qu'il est recommandé de placer au point haut du coffrage lors de son installation comme illustré sur la figure. Cette valve serait bien sûr située au point le plus bas si la canalisation contenait du liquide. Cette valve permet la sortie du gaz provenant de la fuite lorsque le coffrage a été installé autour de la bride. On voit donc que l'endroit exact de la fuite n'a pas d'importance puisque le gaz fuyard est emprisonné dans le coffrage étanche 12 et ne peut s'échapper que par la valve 18.

Lorsque le coffrage souple 12 a été entièrement installé, le bouchon de la valve est retiré afin de permettre au gaz fuyard de s'évacuer sans provoquer une surpression dans le coffrage. A noter qu'il est recommandé d'utiliser un coffrage pouvant résister à la pression du gaz bien que ceci ne soit pas obligatoire.

La deuxième étape consiste à installer un deuxième coffrage 20 rigide et étanche emprisonnant le premier coffrage et ayant la forme d'un anneau ouvert à sa base comme le premier coffrage. Le coffrage est fixé par ses deux bords 22 et 24 sur la canalisation 11 grâce à un moyen de fixation approprié tel qu'un adhésif en mousse. A noter que le coffrage rigide 20 peut être tout type de manchon destiné au colmatage des fuites dans les canalisations, et en particulier le manchon modulaire qui fait l'objet du brevet . Généralement, le manchon est fixé solidement sur la canalisation 11 grâce à des sangles (non représentées) qui viennent serrer les bords 22 et 24 de la bride.

A noter que, lorsque la pression du fluide à l'intérieur de la canalisation est importante, par exemple supérieure à 15 bars, il peut être judicieux de renforcer le coffrage souple par la pose d'un insert enroulé autour du coffrage tel que décrit dans la demande de brevet

Le coffrage rigide ou manchon 20, étanche, est destiné à recevoir une matière polymérisable. Pour ce faire, il dispose d'au moins un orifice d'injection 27 dans lequel on place un entonnoir 28 adapté pour y verser la matière polymérisable. L'orifice d'injection du coffrage rigide doit se trouver au point haut du coffrage et à proximité de la valve 18 (lorsqu'il s'agit d'une canalisation de gaz).

Le coffrage rigide 20 comporte un trou qui est disposé exactement à l'aplomb de la valve 18 de manière à y introduire un tube de guidage destiné à se placer autour de la valve. Ce tube de guidage a pour fonction d'aiguiller le gaz hors du coffrage rigide.

La troisième étape consiste à injecter une résine polymérisable à l'intérieur du coffrage rigide 20 en versant la résine liquide dans l'entonnoir 28. La matière polymérisable liquide vient remplir tout le volume du coffrage rigide à l'extérieur du coffrage souple. Grâce au tube de guidage 30 qui enserre la valve 18, la matière liquide ne peut pas pénétrer à l'intérieur du coffrage souple alors que le gaz fuyard continue à s'échapper par la valve 18.

A ce stade, il existe deux variantes possibles. Selon une première variante, le bouchon de fermeture de la valve est introduit dans le tube de guidage 30 quand le niveau de la résine atteint la valve et la valve est fermée à l'aide du bouchon. Puis, après avoir retiré le tube de guidage, on continue d'introduire la résine liquide jusqu'à ce que le remplissage ait atteint les trous d'injection, la valve étant noyée dans la résine. Il va de soi que cette technique ne peut être utilisée que si le coffrage souple résiste à une pression supérieure à celle du gaz à l'intérieur de la canalisation.

Selon la seconde variante, la résine est injectée jusqu'à atteindre les trous d'injection sans que le tube de guidage ne soit retiré. Ce n'est que lorsque la résine est polymérisée et donc solide que le bouchon est introduit dans le tube de guidage et que la valve est fermée.

La méthode qui vient d'être décrite a l'avantage de protéger la bride à l'intérieur du coffrage souple en même temps qu'il assure l'étanchéité totale. Par la suite, s'il s'avère nécessaire d'accéder à la bride pour une intervention majeure, il suffira de casser le manchon de résine polymérisée et de dégager la bride en retirant le coffrage souple.

Bien que la description ci-dessus concerne une fuite située à l'endroit d'une bride, il va de soi que la méthode selon l'invention s'applique à toute fuite ayant lieu à un endroit quelconque de la canalisation, c'est-à-dire en dehors d'une bride. Dans ce cas, le coffrage souple est fixé directement sur la paroi extérieure de la canalisation comme est fixé également le coffrage rigide.

## Revendications

1. Méthode de réparation d'une canalisation (11) renfermant du fluide sous pression comportant au moins une fuite située à l'endroit d'une bride comprenant les étapes suivantes :
a) mise en place d'un premier coffrage (12) souple et étanche prenant appui sur la canalisation de chaque côté de la bride et emprisonnant cette dernière, ledit coffrage comportant une valve (18) pour que le fluide provenant de la fuite puisse s'échapper,
b) mise en place d'un second coffrage (20) étanche prenant appui sur la canalisation de chaque côté dudit coffrage souple et emprisonnant ce dernier, et comprenant un trou situé à l'endroit de ladite valve adapté pour introduire un tube de guidage (30) destiné à venir se placer autour de ladite valve et permettre d'une part d'aiguiller le fluide hors dudit coffrage rigide et d'autre part d'introduire un bouchon pour fermer ladite valve,
c) injection d'une matière liquide polymérisable à l'intérieur dudit second coffrage, ledit coffrage souple étant alors emprisonné dans un manchon de résine polymère après polymérisation de la matière polymérisable ;
ladite méthode étant **caractérisée en ce que** ledit second coffrage est rigide et a la forme d'un anneau.

2. Méthode selon la revendication 1, dans laquelle ledit coffrage rigide (20) comprend au moins un orifice d'injection (27) placé à proximité de ladite valve (18) de façon à y introduire un entonnoir (28) permettant de verser ladite matière polymérisable à l'intérieur dudit coffrage rigide.

3. Méthode selon la revendication 2, dans laquelle le fluide sous pression est du gaz, ladite valve (18) étant disposée au point le plus haut dudit coffrage souple (12) pour que le gaz provenant de la fuite puisse s'échapper.

4. Méthode selon la revendication 3, dans laquelle ledit bouchon de fermeture de ladite valve (1B) est introduit dans ledit tube de guidage (30) quand le niveau de la résine atteint ladite valve de façon à fermer celle-ci à l'aide du bouchon, la résine liquide est continuée d'être versée jusqu'à ce que le remplissage ait atteint ledit trou d'injection (27), et ledit tube de guidage est retiré de manière à ce que ladite valve soit noyée dans la résine.

5. Méthode selon la revendication 3, dans laquelle la résine est injectée jusqu'à atteindre ledit trou d'injection (27) et ledit bouchon de fermeture de ladite valve (18) est introduit dans ledit tube de guidage (30) de façon à fermer ladite valve lorsque la résine est polymérisée et donc solide.

6. Méthode selon l'une des revendications 1 à 5, dans laquelle ledit coffrage rigide (20) comporte deux bords (22 et 24) qui sont fixés sur la canalisation (11) grâce à un moyen de fixation approprié tel qu'un adhésif en mousse.

7. Méthode selon la revendication 6, dans laquelle des sangles sont utilisées pour serrer lesdits bords (22 et 24) dudit coffrage rigide (20) sur la canalisation (11).

8. Méthode selon la revendication 6, dans laquelle ledit coffrage rigide (20) est un manchon modulaire.

## Claims

1. A method of repairing a pipe (11) containing a pressurised fluid and comprising at least one leak located in a flange, including the following steps:
a) installing a first flexible and sealed casing (12) engaging the pipe on each side of the flange and enclosing the latter, said casing comprising a valve (18) so that the fluid originating from the leak can escape,
b) installing a second sealed casing (20) engaging the pipe on each side of said flexible casing and enclosing the latter, and comprising a hole located in said valve suitable for the introduction of a guide tube (30) intended to be placed around said valve and on the one hand direct the fluid outside of said rigid casing and on the other hand introduce a plug to close said valve,
c) injecting a polymerisable liquid material into said second casing, whereby said flexible casing is thus enclosed within a sleeve of polymer resin following the polymerisation of the polymerisable material;
said method being **characterised in that** said second casing is rigid and ringshaped.

2. A method according to claim 1, wherein said rigid casing (20) comprises at least one injection hole (27) placed near to said valve (18) for the introduction of a funnel (28) enabling said polymerisable material to be poured into said rigid casing.

3. A method according to claim 2, wherein the pressurised fluid is gas, with said valve (18) being positioned at the highest point of said flexible casing (12) so that the gas originating from the leak can escape.

4. A method according to claim 3, wherein said closing plug of said valve (18) is introduced into said guide tube (30) when the level of resin reaches said valve in order to close the latter using the plug, the liquid resin continues to be poured until said injection hole (27) is reached, and said guide tube is removed so that said valve becomes submerged in the resin.

5. A method according to claim 3, wherein the resin is injected until said injection hole (27) is reached and said closing plug of said valve (18) is introduced into said guide tube (30) so as to close said valve when the resin has become polymerised and thus solid.

6. A method according to one of claims 1 to 5, wherein said rigid casing (20) comprises two edges (22 and 24), which are attached to the pipe (11) via an appropriate fixing means such as a foam adhesive.

7. A method according to claim 6, wherein straps are used to tighten said edges (22 and 24) of said rigid casing (20) on the pipe (11).

8. A method according to claim 6, wherein said rigid casing (20) is a modular sleeve.

## Patentansprüche

1. Verfahren zur Reparatur einer Kanalisation (11), die ein unter Druck stehendes Medium einschließt, und die zumindest ein Leck aufweist, das sich an der Stelle eines Flansches befindet, umfassend die folgenden Schritte:
a) das Anbringen einer ersten flexiblen und dichten Schalung (12), die sich beiderseits des Flansches an die Kanalisation anlegt, und letztere einschließt, wobei die besagte Schalung ein Ventil (18) umfasst, damit das aus dem Leck austretende Medium entweichen kann,
b) das Anbringen einer zweiten dichten Schalung (20), die sich beiderseits der flexiblen Schalung an die Kanalisation anlegt, um letztere einzuschließen, und die ein Loch umfasst, das sich an der Stelle des besagten Ventils befindet, das dazu geeignet ist, ein Führungsrohr (30) einzuführen, das dazu bestimmt ist, sich um das besagte Ventil zu platzieren, und mit dem einerseits das Medium aus der besagten steifen Schalung geleitet werden kann, und andererseits ein Stopfen eingeführt werden kann, um das besagte Ventil zu verschließen,
c) das Einspritzen eines polymerisierbaren flüssigen Materials ins Innere der besagten zweiten Schalung, wobei die besagte flexible Schalung somit nach dem Polymerisieren des polymerisierbaren Materials in einer Muffe aus Polymerharz eingeschlossen ist;
wobei die besagte Methode **dadurch gekennzeichnet ist, dass** die besagte zweite Schalung steif ist, und die Form eines Ringes aufweist.

2. Methode nach Anspruch 1, bei der die besagte steife Schalung (20) zumindest eine Einspritzöffnung (27) umfasst, die in der Nähe des besagten Ventils (18) angeordnet ist, sodass darin einen Trichter (28) eingeführt wird, durch den das besagte polymerisierbare Material ins Innere der besagten steifen Schalung gegossen werden kann.

3. Methode nach Anspruch 2, bei der das unter Druck stehende Medium Gas ist, wobei das besagte Ventil (18) am höchsten Punkt der besagten flexiblen Schalung (12) angeordnet ist, damit das aus dem Leck ausströmende Gas entweichen kann.

4. Methode nach Anspruch 3, bei der der besagte Verschlussstopfen des besagten Ventils (18) in das besagte Führungsrohr (30) eingeführt wird, wenn das Niveau des Harzes das besagte Ventil erreicht, sodass dieses mithilfe des Stopfens verschlossen wird, wobei das flüssige Harz weiterhin eingefüllt wird, bis das besagte Einspritzloch (27) erreicht wird, und das besagte Führungsrohr herausgezogen wird, sodass das besagte Ventil im Harz versenkt ist.

5. Methode nach Anspruch 3, bei der das Harz solange eingespritzt wird, bis das besagte Einspritzloch (27) erreicht wird, und der besagte Verschlussstopfen des besagten Ventils (18) in das Führungsrohr (30) eingeführt wird, sodass das besagte Ventil geschlossen wird, sobald das Harz polymerisiert und somit ausgehärtet ist.

6. Methode nach einem der Ansprüche 1 bis 5, bei der die besagte steife Schalung (20) zwei Ränder (22 und 24) umfasst, die mit geeigneten Befestigungsvorrichtungen, wie einem Schaumstoffklebeband, auf der Kanalisation (11) befestigt sind.

7. Methode nach Anspruch 6, bei der Gurte verwendet werden, um die besagten Ränder (22 und 24) der besagten steifen Schalung (20) auf der Kanalisation (11) festzuziehen.

8. Methode nach Anspruch 6, bei der die besagte steife Schalung (20) eine modulare Muffe ist.
